(19)

Europäisches
Patentamt
European
Patent Office
Office européen
des brevets

(11) **EP 3 683 555 A1**

(12) **EUROPEAN PATENT APPLICATION**
published in accordance with Art. 153(4) EPC

(43) Date of publication:
**22.07.2020 Bulletin 2020/30**

(21) Application number: **18856741.6**

(22) Date of filing: **11.07.2018**

(51) Int Cl.:
*G01F 1/68* (2006.01)     *G01F 3/22* (2006.01)

(86) International application number:
**PCT/JP2018/026240**

(87) International publication number:
**WO 2019/054030 (21.03.2019 Gazette 2019/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.09.2017 JP 2017177793**

(71) Applicant: Omron Corporation
**Kyoto-shi, Kyoto 600-8530 (JP)**

(72) Inventors:
• YAMAMOTO, Katsuyuki
  Kyoto (JP)
• HANDA, Kenichi
  Kyoto (JP)
• NAKAO, Hideyuki
  Kyoto (JP)
• UEDA, Naotsugu
  Kyoto (JP)

(74) Representative: Kilian Kilian & Partner
Aidenbachstraße 54
81379 München (DE)

(54) **FLOW RATE MEASUREMENT DEVICE, GAS METER PROVIDED WITH FLOW RATE MEASUREMENT DEVICE, AND FLOW RATE MEASUREMENT DEVICE UNIT FOR GAS METER**

(57)     Provided is a technique capable of more accurately measuring and outputting a flow rate according to an intended purpose, in a flow rate measurement device. A flow rate measurement device (1) for detecting a flow rate of measurement target fluid flowing through a main flow path (2) includes: a heater (113) configured to heat measurement target fluid; a plurality of temperature detectors (111, 112) that are arranged with the heater interposed in between in a flow direction of the measurement target fluid, and are configured to detect a temperature of the measurement target fluid; and a converter (133) configured to convert a difference in outputs of the plurality of temperature detectors into a heat flow rate or a heat quantity of measurement target fluid flowing through the main flow path.

Fig. 17

EP 3 683 555 A1

**Description**

TECHNICAL FIELD

The present invention relates to a flow rate measurement device, a gas meter having the flow rate measurement device, and a flow rate measurement device unit for the gas meter.

BACKGROUND ART

Conventionally, there has been proposed a measurement device that has a heater and a sensor, and calculates a flow velocity or a flow rate of fluid by the sensor detecting a temperature distribution that changes in accordance with a flow of the fluid.

Further, there has been proposed a flow rate measurement device (see, for example, Patent Document 1) including: a flow rate detection unit for detecting a flow rate of a fluid to be measured, the fluid flowing in a main flow channel; a characteristic value acquisition unit for acquiring characteristic values of the fluid to be measured, the characteristic value acquisition unit having a heating unit for heating the fluid to be measured, and a temperature detection unit for detecting the temperature of the fluid to be measured; and a flow rate correction unit for correcting the flow rate of the fluid to be measured using the characteristic values of the fluid to be measured acquired by the characteristic value acquisition unit, the flow rate having been calculated on the basis of detection signals outputted from the flow rate detection unit. The heating unit and the temperature detection unit are disposed by being aligned in the direction orthogonal to the flowing direction of the fluid to be measured, and the characteristic value acquisition unit acquires the characteristic values on the basis of a difference between temperatures of the fluid to be measured detected by the temperature detection unit prior to and after changing the temperature of the heating unit.

Here, in the conventional thermal flow rate measurement device as described above, the measured flow rate has been outputted as a volume flow rate, which is a volume of the gas that has flowed. However, it is conceivable that the purpose of measuring the gas flow rate is to detect a usage amount of the gas as energy, for example. For such a purpose, when measuring a gas flow rate, it is desirable that the output is performed so as to enable detection of an amount of energy that can be supplied by the gas that has flowed. In addition, conventionally, it has been difficult to detect an accurate gas energy value in some cases, since a value of a volume flow rate that has been outputted from the flow rate measurement device changes due to an influence of a gas temperature, pressure, and the like.

PRIOR ART DOCUMENT

PATENT DOCUMENT

Patent Document 1: Japanese Unexamined Patent Publication No. 2017-129470

SUMMARY OF THE INVENTION

PROBLEMS TO BE SOLVED BY THE INVENTION

The present invention has been made in view of the above problems, and an object of the present invention is to provide a technique capable of more accurately measuring and outputting a flow rate according to an intended purpose, in a flow rate measurement device.

MEANS FOR SOLVING THE PROBLEM

The present invention for solving the above problems is a flow rate measurement device for detecting a flow rate of measurement target fluid flowing through a main flow path.

The flow rate measurement device includes:

a heater configured to heat measurement target fluid;
a plurality of temperature detectors arranged with the heater interposed in between in a flow direction of the measurement target fluid, the plurality of temperature detectors being configured to detect a temperature of the measurement target fluid; and
a converter configured to convert a difference in outputs of the plurality of temperature detectors into a heat flow rate or a heat quantity of measurement target fluid flowing through the main flow path.

According to this, it becomes possible to directly output a value corresponding to an amount of a gas used as energy, and to output an accurate flow rate that is less susceptible to a temperature or pressure of the gas.

Here, in a thermal flow rate measurement device including: a heater configured to heat measurement target fluid; and a plurality of temperature detectors that are arranged with the heater interposed in between in a flow direction of the measurement target fluid, and are configured to detect a temperature of the measurement target fluid, a flow rate is measured on the basis of a temperature difference in the plurality of temperature detectors. However, a characteristic of a temperature difference output by the temperature detector is close to a heat flow rate or a heat quantity rather than a volume flow rate. Therefore, if the heat flow rate or the heat quantity is outputted as a final output by the thermal flow rate measurement device, it becomes possible to more easily convert the temperature difference output by the temperature detector into the output of the heat flow rate or the heat quantity. As a result, it becomes possible to reduce a load on an arithmetic device and realize higher speed processing.

Further, in the present invention, the converter may have a correction unit configured to perform correction such that a relationship between a difference in outputs of the plurality of temperature detectors and a heat flow rate or a heat quantity of measurement target fluid flowing through the main flow path becomes a straight line.

As described above, if a heat flow rate or a heat quantity is outputted as a final output by the thermal flow rate measurement device according to the invention, it is possible to obtain an output as a heat flow rate or a heat quantity, by performing correction such that a relationship between a temperature difference output by the temperature detector and a heat flow rate or a heat quantity of the measurement target fluid becomes a straight line, without considering effects of a fluid temperature or pressure and fluid composition. According to this, it becomes possible to acquire a heat flow rate or a heat quantity as a final output of the flow rate measurement device through easier processing.

Further, the present invention may further include: a second converter configured to convert a difference in outputs of the plurality of temperature detectors into a volume flow rate of measurement target fluid flowing through the main flow path; and

a conversion adjuster configured to adjust a combination of a conversion to a heat flow rate or a heat quantity by the converter, and a conversion by the volume flow rate by the second converter, in converting a difference in outputs of the plurality of temperature detectors into the heat flow rate or the heat quantity of measurement target fluid flowing through the main flow path.

According to this, in accordance with a purpose of the flow rate measurement device, it becomes possible to adjust whether to, as the final output of the flow rate measurement device, output a heat flow rate or a heat quantity, output a volume flow rate, or output both the heat flow rate or the heat flow and the volume flow rate.

Further, the present invention may be a flow rate measurement device unit including:

the above flow rate measurement device;
a display configured to display a heat flow rate or a heat quantity converted by the converter; and
an integrated controller configured to control the flow rate measurement device and the display.

This makes it possible to more easily or efficiently manufacture a gas meter that can output and display a heat flow rate or a heat quantity.

Further, the present invention may be a gas meter including:

the above flow rate measurement device;
a display configured to display a heat flow rate or a heat quantity measured by the flow rate measurement device;
an integrated controller configured to control the flow rate measurement device and the display;
a power supply unit configured to supply power to the flow rate measurement device, the display, and the integrated controller;
a casing configured to accommodate the flow rate measurement device, the display, and the integrated controller; and
an operation unit configured to allow setting of an operation of the flow rate measurement device from outside the casing.

According to this, it is possible to provide a gas meter that can output and display a gas usage amount corresponding to a used heat quantity and being more suitable for a purpose.

EFFECT OF THE INVENTION

According to the present invention, the flow rate measurement device can more accurately measure and output a flow rate according to an intended purpose.

BRIEF DESCRIPTION OF THE DRAWINGS

Fig. 1 is an exploded perspective view showing an example of a flow rate measurement device in a first embodiment of the present invention.

Fig. 2 is a cross-sectional view showing an example of the flow rate measurement device in the first embodiment of the present invention.

Fig. 3 is a plan view showing a sub flow path portion in the first embodiment of the present invention.

Fig. 4 is a perspective view showing an example of a sensor element in the first embodiment of the present invention.

Figs. 5(a) and 5(b) are cross-sectional views for explaining a mechanism of the sensor element in the first embodiment of the present invention.

Fig. 6 is a plan view showing a schematic configuration of a flow rate detector in the first embodiment of the present invention.

Fig. 7 is a plan view showing a schematic configuration of a physical property value detector in the first embodiment of the present invention.

Fig. 8 is a block diagram showing a functional configuration of a circuit board in the first embodiment of the present invention.

Fig. 9 is a view showing effects of a temperature change in a gas temperature and a gas composition change, on a gas volume flow rate, a flow rate detector output, and a gas heat flow rate.

Fig. 10 is a graph showing a relationship between a flow rate detector output and a volume flow rate.

Fig. 11 is a view showing a relationship between composition of each gas and a heat quantity.

Fig. 12 is a graph showing a heat quantity of each gas.

Fig. 13 is a graph showing a relationship between thermal conductivity of each gas and a heat quantity.

Fig. 14 is a view showing a relationship between a heat quantity of a gas, thermal conductivity of a gas, and an output of a heat quantity detector.

Figs. 15(a) and 15(b) are graphs showing a relationship between a volume flow rate and a heat quantity detector output, and a relationship between a heat flow rate and a heat quantity detector output.

Fig. 16 is a graph showing a relationship between a corrected heat flow rate and a final output of the flow rate measurement device in the first embodiment of the present invention.

Fig. 17 is a flowchart of flow rate measurement processing in the first embodiment of the present invention.

Fig. 18 is a block diagram showing a functional configuration of a circuit board in a second embodiment of the present invention.

Fig. 19 is a block diagram showing a functional configuration of a gas meter according to a third embodiment of the present invention.

MODE FOR CARRYING OUT THE INVENTION

[Application example]

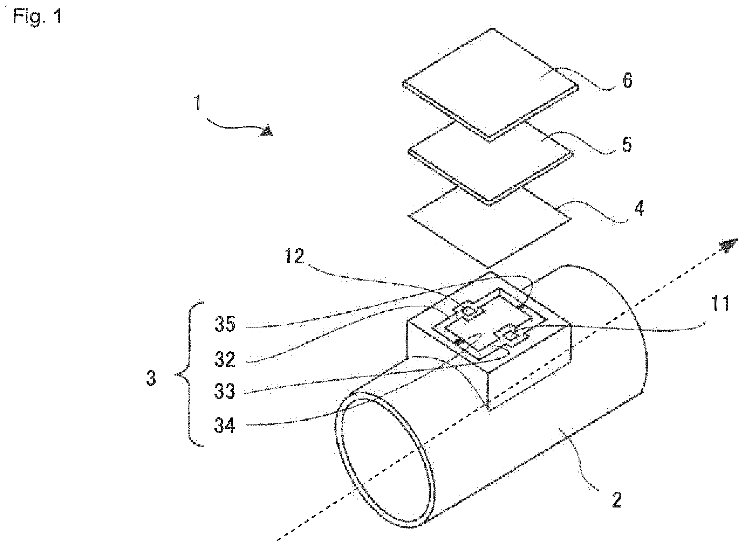

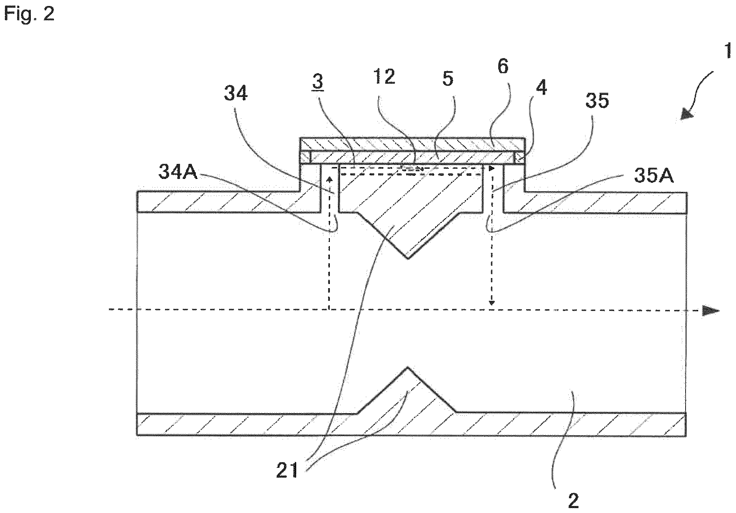

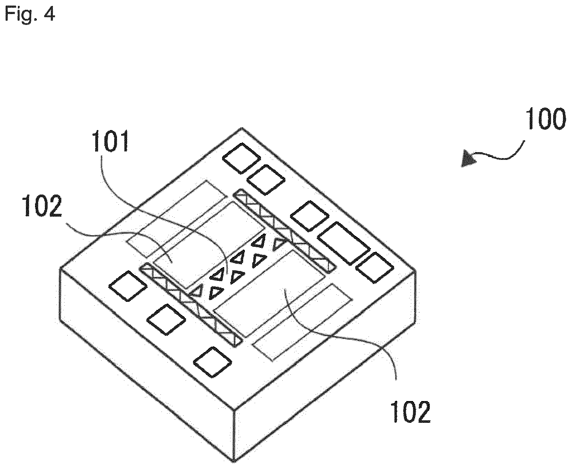

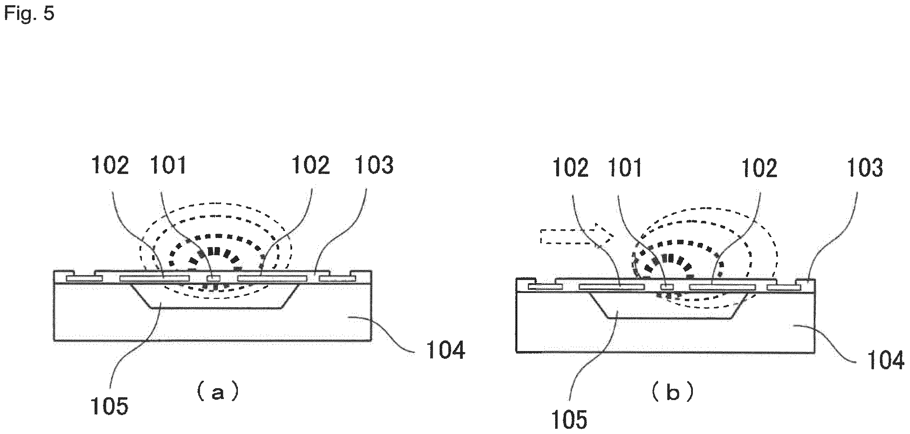

Hereinafter, an application example of the present invention will be described with reference to the drawings. The present invention is applied to, for example, a thermal flow rate measurement device 1 as shown in Fig. 1. As shown in Fig. 2, the flow rate measurement device 1 divides fluid flowing through a main flow path portion 2, and leads a part thereof to a flow rate detector 11 to measure a flow rate in the flow rate detector 11 having high correlation with a flow rate of the fluid in the main flow path portion 2. As shown in Fig. 4, a sensor element used in the flow rate detector 11 has a configuration in which two temperature detectors 102 are arranged with a micro heater (heater) 101 interposed in between. A measurement principle is, as shown in Figs. 5(a) and 5(b), using correlation between a temperature difference $\Delta T$ of temperatures detected by the two temperature detectors 102 and a flow rate of the fluid passing thereabove.

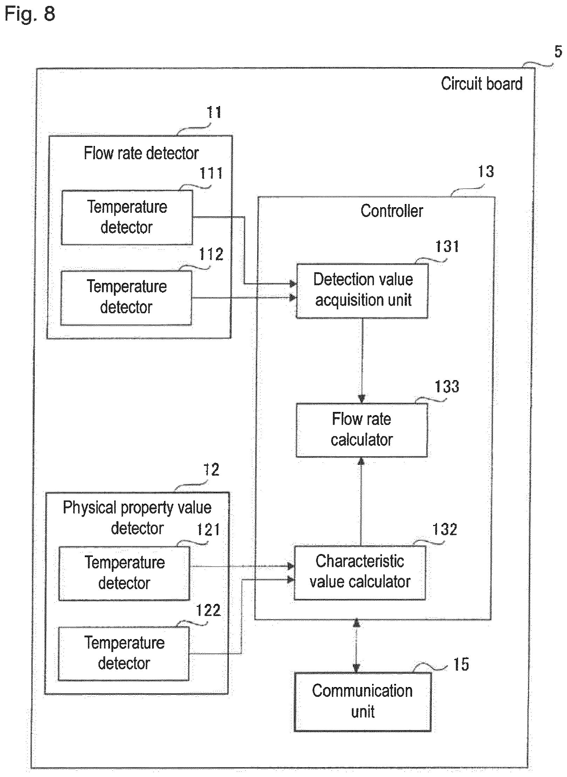

In addition, as shown in the functional block diagram in Fig. 8 of the flow rate measurement device 1, an output of the flow rate detector 11 is transmitted to a detection value acquisition unit 131 of a controller 13 realized by a central processing unit (CPU) arranged on a circuit board 5, and subjected to necessary correction and the like in a flow rate calculator 133, and then a flow rate as a final output is calculated. Meanwhile, in the thermal flow rate measurement device as described above, a volume flow rate (l/min) has often been conventionally outputted as a final output of the flow rate measurement device 1.

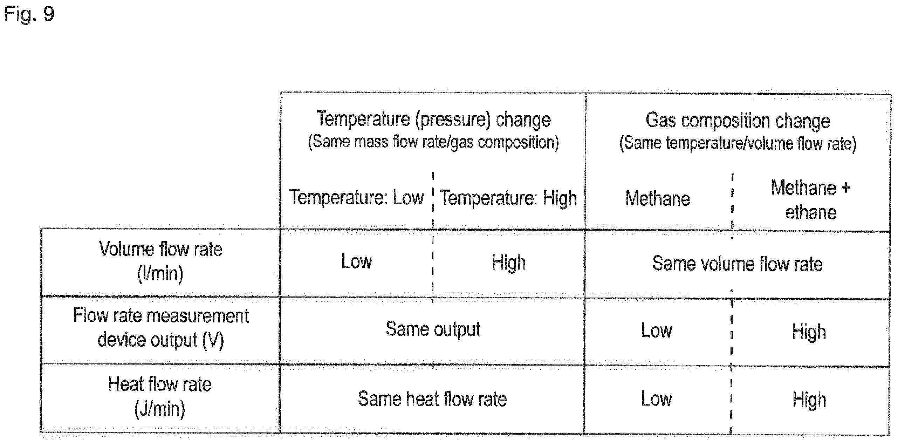

However, in a case of using the flow rate measurement device 1 for the purpose of measuring a usage amount of a gas and the like, for example, it is desirable that the output is performed so as to enable detection of an amount of energy that can be supplied by the fluid that has flowed, rather than a volume flow rate (l/min). Further, as shown in an upper part of Fig. 9, in principle, the volume flow rate (l/min) has a disadvantage of being susceptible to a fluid temperature or the like that varies depending on the season and the like.

Further, the volume flow rate (l/min) as the final output of the flow rate measurement device 1 changes due to an influence of a temperature or pressure of the fluid as shown in the upper part of Fig. 9, but the output has a characteristic of being less susceptible even when composition of the fluid changes. On the other hand, an output of the flow rate detector 11 has a characteristic of being not affected by a change in a temperature or pressure of the fluid, but affected by a change in composition of the fluid. As a result, in a case of outputting the volume flow rate (l/min) as the final output of the flow rate measurement device 1, it has been necessary to perform complex (or significant) conversion on the output of the flow rate detector 11.

On the other hand, in the present invention, a heat flow rate (J/min) is to be outputted as a final output of the fluid measurement device 1. This heat flow rate (J/min) shows a characteristic of being not affected by a change in a temperature or pressure of the fluid, but affected by a change in composition of the fluid, which is similar to the characteristic of the output of the thermal flow rate detector 11. Consequently, when the output of the flow rate detector 11 is converted into the heat flow rate (J/min) as the final output of the fluid measurement device 1, a very simple conversion is sufficient.

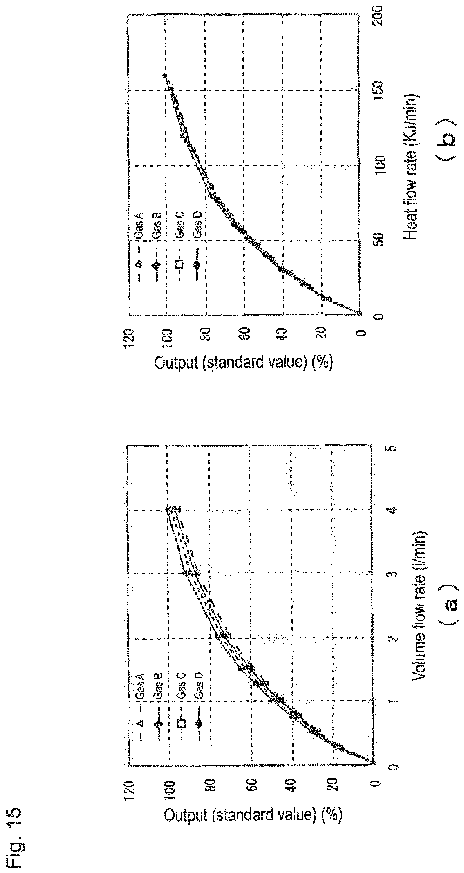

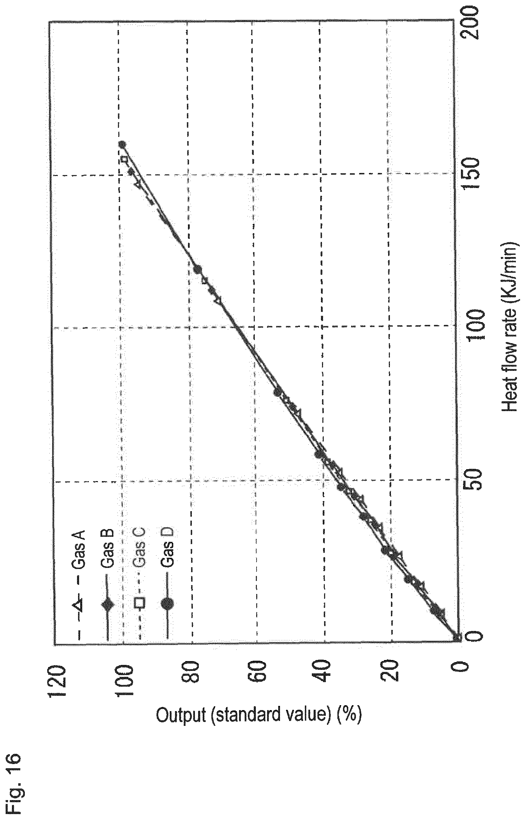

That is, while a relationship between the output of the flow rate detector 11 and the volume flow rate (l/min) has been changed depending on the composition of the fluid as shown in Fig. 15(a), a relationship between the output of the flow rate detector 11 and the heat flow rate (J/min) is hardly changed depending on the composition of the fluid as shown in Fig. 15(b). Then, in a case of outputting the heat flow rate (J/min) as the final output of the fluid measurement device 1, it has become possible to obtain a stable output line as shown in Fig. 16 that is not affected by the composition of the fluid, with a simple correction for correcting only linearity of a curve with respect to the output of the flow rate detector 11.

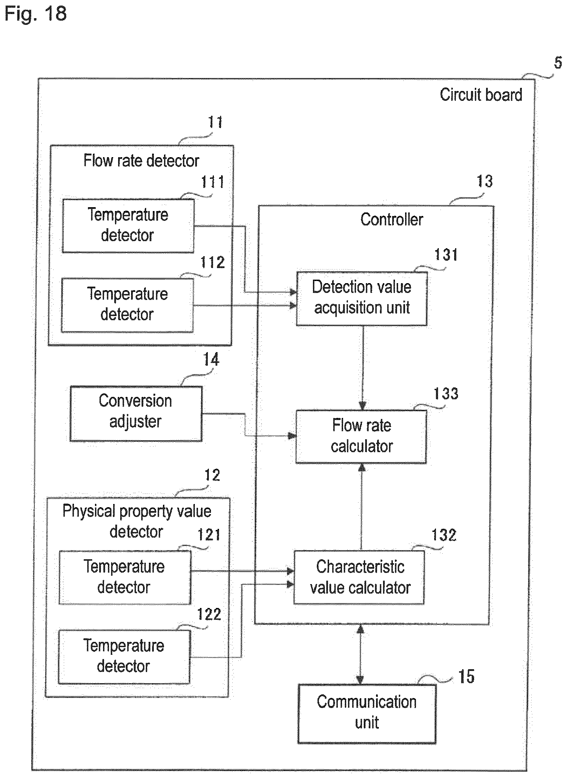

Note that, the flow rate measurement device 1 of the present invention may be provided with a conversion adjuster 14 shown in Fig. 18, to adjust whether to output a heat flow rate, output a volume flow rate, or output both the heat flow rate and the volume flow rate, as the final output.

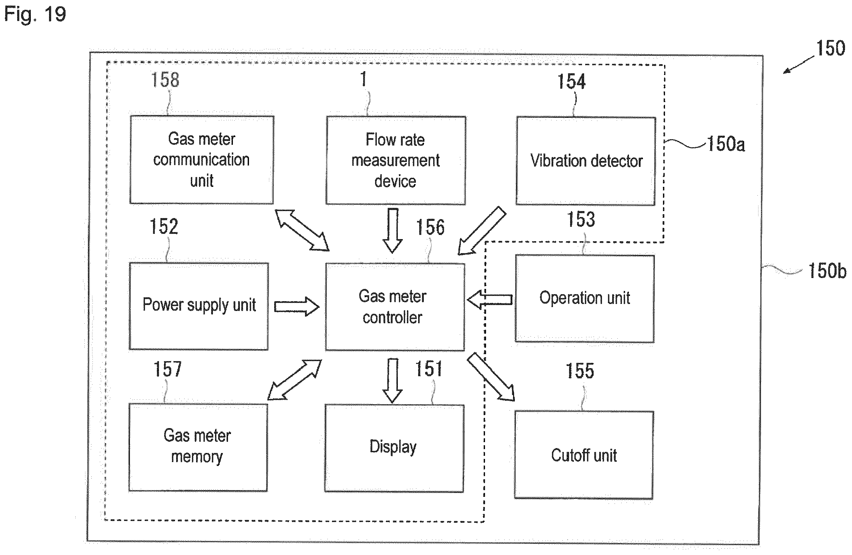

Note that the present invention may be applied to the thermal flow rate measurement device 1 as described above, or may be applied to a gas meter 150 provided with the flow rate measurement device 1 as shown in Fig. 19. In addition to the flow rate measurement device 1, the gas meter 150 includes a display 151, a power supply unit 152, a memory 153, a gas meter controller 155, a vibration detector 156, and a cutoff unit 157.

Further, in Fig. 19, the present invention may be applied to a flow rate measurement device unit 150a that is easily incorporated in manufacturing the gas meter 150 by unitizing the flow rate measurement device 1, the display 151, the power supply unit 152, the memory 153, and the gas meter controller 155.

[First embodiment]

Hereinafter, a flow rate measurement device according to an embodiment of the present invention will be described in more detail with reference to the drawings.

<Device configuration>

Fig. 1 is an exploded perspective view showing an example of a flow rate measurement device 1 according to the embodiment. Fig. 2 is a cross-sectional view showing an example of the flow rate measurement device 1. The flow rate measurement device 1 is incorporated in, for example, a gas meter, a combustion device, an internal combustion engine of an automobile and the like, a fuel cell, other industrial devices of medical care and the like, or built-in equipment, and measures an amount of fluid passing through a flow path. Note that broken-line arrows in Figs. 1 and 2 illustrate a direction of a fluid flow.

Further, as shown in Fig. 1, the flow rate measurement device 1 according to the embodiment includes a main flow path portion 2, a sub flow path portion 3, a seal 4, a circuit board 5, and a cover 6. As shown in Figs. 1 and 2, in this embodiment, the flow rate measurement device 1 has the sub flow path portion 3 branched from the main flow path portion 2. Further, the sub flow path portion 3 is provided with a flow rate detector 11 and a physical property value detector 12. The flow rate detector 11 and the physical property value detector 12 are configured by a thermal flow sensor including: a heater formed by a micro heater; and a temperature detector formed by a thermopile. Further, in this embodiment, a physical property value of fluid is detected using the physical property value detector 12, and a flow rate detected by the flow rate detector 11 is corrected on the basis of the physical property value of the fluid. However, the flow rate measurement device 1 need not include the physical property value detector 12.

The main flow path portion 2 is a tubular member through which a flow path (hereinafter also referred to as a main flow path) of measurement target fluid penetrates in a longitudinal direction. As shown in Fig. 2, an inflow port (first inflow port) 34A is formed on an inner peripheral surface of the main flow path portion 2 on an upstream side with respect to a fluid flow direction, and an outflow port (first outflow port) 35A is formed on a downstream side. For example, an axial length of the main flow path portion 2 is about 50 mm, a diameter of the inner peripheral surface (inner diameter of the main flow path portion 2) is about 20 mm, and an outer diameter of the main flow path portion 2 is about 24 mm, but the dimensions of the main flow path portion 2 are not limited to these. Further, in the main flow path portion 2, an orifice 21 is provided between the inflow port 34A and the outflow port 35A. The orifice 21 is a resistor whose inner diameter is smaller than that before and after in the main flow path portion 2, and an amount of fluid flowing into the sub flow path portion 3 can be adjusted in accordance with a size of the orifice 21.

In Figs. 1 and 2, the sub flow path portion 3, which is a portion internally including the sub flow path branched from the main flow path, is provided vertically above the main flow path portion 2. Further, the sub flow path in the sub flow path portion 3 includes an inflow path 34, a physical property value detection flow path 32, a flow rate detection flow path 33, and an outflow path 35. A part of fluid flowing through the main flow path portion 2 branches and flows into the sub flow path portion 3.

The inflow path 34 is a flow path for allowing a fluid flowing through the main flow path portion 2 to flow in and to be divided into the physical property value detection flow path 32 and the flow rate detection flow path 33. The inflow path 34 is formed along a direction perpendicular to a fluid flow direction in the main flow path portion 2, with one end communicating with the inflow port 34A, and the other end communicating with the physical property value detection flow path 32 and the flow rate detection flow path 33. A part of fluid flowing through the main flow path portion 2 is further divided into the physical property value detection flow path 32 and the flow rate detection flow path 33 via the inflow path 34. Fluid of an amount corresponding to an amount of the fluid flowing through the main flow path portion 2 flows into such the physical property value detection flow path 32 and the flow rate detection flow path 33. Therefore, the flow rate detector 11 can detect a value corresponding to an amount of the fluid flowing through the main flow path portion 2.

As shown in Fig. 1, the physical property value detection flow path 32 is a flow path formed vertically above the main flow path portion 2, extending in a direction parallel to the main flow path portion 2, and having a substantially U-shaped cross section when viewed from above. Inside the physical property value detection flow path 32, the physical property value detector 12 configured to detect a physical property value of measurement target fluid is disposed. One end of the physical property value detection flow path 32 communicates with the inflow port 34A through the inflow path 34, and the other end communicates with the outflow port 35A through the outflow path 35.

The flow rate detection flow path 33 is also a flow path extending in a direction parallel to the fluid flow direction in the main flow path portion 2 and having a substantially U-shaped cross section when viewed from above. Inside the flow rate detection flow path 33, the flow rate detector 11 configured to detect a flow rate of fluid is disposed. Further, one end of the flow rate detection flow path 33 communicates with the inflow port 34A through the inflow path 34, and the other end communicates with the outflow port 35A through the outflow path 35. Note that the physical property value detector 12 and the flow rate detector 11 are individually mounted on the circuit board 5. Then, the circuit board 5 is arranged so as to cover an upper part of the physical property value detection flow path 32 and the flow rate detection flow path 33 that are open at the top, and such that the physical property value detector 12 is positioned in the physical property value detection flow path 32, and the flow rate detector 11 is positioned in the flow rate detection flow path 33.

The outflow path 35 is a flow path for allowing measurement target fluid that has passed through the physical property value detection flow path 32 and the flow rate detection flow path 33 to flow out to the main flow path portion 2. The outflow path 35 is formed along a direction perpendicular to the main flow path portion 2, with one end communicating with the outflow port 35A, and the other end communicating with the physical property value detection flow path 32 and the flow rate detection flow path 33. The measurement target fluid that has passed through the physical property value detection flow path 32 and the flow rate detection flow path 33 flows out to the main flow path portion 2 via the outflow path 35.

In this embodiment, as described above, the measurement target fluid that has flowed in from one inflow port 34A is divided into the physical property value detection flow path 32 and the flow rate detection flow path 33. This allows the flow rate detector 11 and the physical property value detector 12 to detect a physical property value and a flow rate of the measurement target fluid individually on the basis of fluid having substantially the same conditions, such as temperature and density. Note that the flow rate measurement device 1 ensures airtightness inside the sub flow path portion 3 by fitting the seal 4 into the sub flow path portion 3, then arranging the circuit board 5, and further fixing the circuit board 5 to the sub flow path portion 3 by the cover 6.

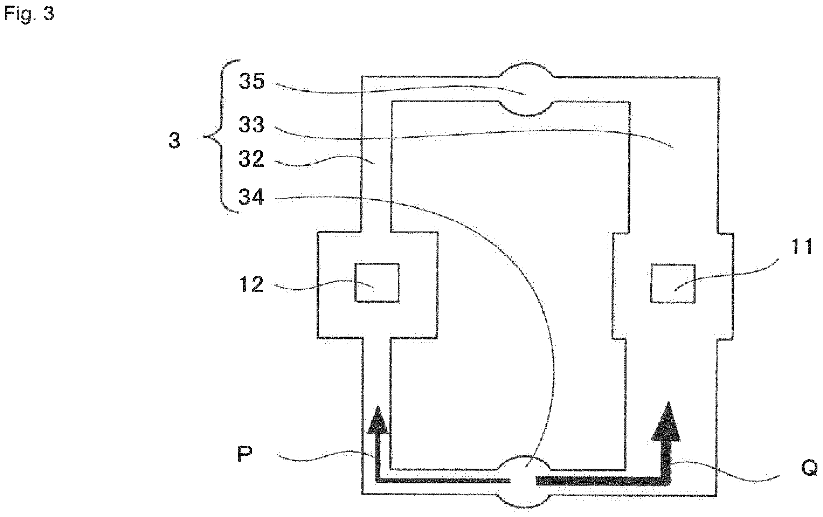

Fig. 3 is a plan view of the sub flow path portion 3 shown in Fig. 1. As shown in Fig. 3, the physical property value detection flow path 32 and the flow rate detection flow path 33 are arranged symmetrically with respect to a line (not shown) connecting the inflow path 34 and the outflow path 35. Further, arrows P and Q schematically represent a ratio of a flow rate of fluid that is divided into the physical property value detection flow path 32 and the flow rate detection flow path 33. In this embodiment, cross-sectional areas of the physical property value detection flow path 32 and the flow rate detection flow path 33 are determined such that an amount of fluid to be divided becomes a ratio of P to Q.

An amount of fluid that actually flows through the physical property value detection flow path 32 and the flow rate detection flow path 33 varies depending on a flow rate of the fluid flowing through the main flow path portion 2. In a normal usage mode, a size of the sub flow path portion 3 relative to the main flow path portion 2, a size of the orifice 21, widths of the physical property value detection flow path 32 and the flow rate detection flow path 33 are individually set such that an amount of fluid flowing through the physical property value detection flow path 32 is to be a value within a detection range of the physical property value detector 12, and an amount of fluid flowing through the flow rate detection flow path 33 is to be a value within a detection range of the flow rate detector 11. Note that the widths of the physical property value detection flow path 32 and the flow rate detection flow path 33 are merely examples, and are not limited to the example shown in Fig. 3.

Thus, in the flow rate measurement device 1, it is possible to individually control a flow rate of fluid divided into the physical property value detection flow path 32 and the flow rate detection flow path 33 by adjusting the individual widths. Therefore, a flow rate of fluid flowing through the physical property value detection flow path 32 can be controlled in accordance with a detection range of the physical property value detector 12, and a flow rate of fluid flowing through the flow rate detection flow path 33 can be controlled in accordance with a detection range of the flow rate detector 11.

The physical property value detection flow path 32 and the flow rate detection flow path 33 are not limited to the configuration formed in a substantially U shape in a top view. In other words, the physical property value detection flow path 32 and the flow rate detection flow path 33 may employ other shapes as long as a width (cross-sectional area) is set such that a flow rate of fluid passing through the physical property value detection flow path 32 and the flow rate detection flow path 33 can be controlled.

Further, in the physical property value detection flow path 32 and the flow rate detection flow path 33, a shape of spaces in which the physical property value detector 12 and the flow rate detector 11 are disposed is substantially square in a top view, but the present invention is not limited to this. The shape of the physical property value detection flow path 32 and the flow rate detection flow path 33 may be any shape as long as the physical property value detector 12 or the flow rate detector 11 can be arranged, and the shape can be determined in accordance with a shape and the like of the physical property value detector 12 and the flow rate detector 11 to be arranged.

Therefore, for example, in a case where a size of the physical property value detector 12 is smaller than the width of the physical property value detection flow path 32, a width of the space in which the physical property value detector 12 is disposed in the physical property value detection flow path 32 may be made to coincide with a width of other part of the physical property value detection amount flow path 32. In other words, in this case, a portion extending in a longitudinal direction of the physical property value detection flow path 32 has a shape with a substantially constant width. Note that this similarly applies to the flow rate detection flow path 33.

As described above, an amount of fluid flowing through the physical property value detection flow path 32 and the flow rate detection flow path 33 is smaller than an amount of fluid flowing through the main flow path portion 2, but each changes in accordance with the amount of fluid flowing through the main flow path portion 2. If the flow rate detector 11 or the physical property value detector 12 is disposed in the main flow path portion 2, it is necessary to increase a scale of the flow rate detector 11 and the physical property value detector 12 in accordance with an amount of fluid flowing through the main flow path portion 2. However, in the embodiment, by providing the sub flow path portion 3 that branches from the main flow path portion 2, a flow rate of the fluid can be measured by the flow rate detector 11 and the physical property value detector 12 having a small scale.

Further, in this embodiment, a cross-sectional area of the physical property value detection flow path 32 is smaller than a cross-sectional area of the flow rate detection flow path 33, and an amount of fluid flowing through the physical property value detection flow path 32 is smaller than an amount of fluid flowing through the flow rate detection flow path 33 as represented by the size of arrows P and Q in Fig. 3. Thus, by reducing an amount of fluid flowing through the physical property value detector 12 as compared with an amount of fluid flowing through the flow rate detector 11, it is possible to reduce an error due to an influence of a flow rate when the physical property value detector 12 detects a physical property value or a temperature of the fluid.

Fig. 4 is a perspective view showing an example of a sensor element to be used in the flow rate detector 11 and the physical property value detector 12. Further, Figs. 5(a) and 5(b) are cross-sectional views for explaining a mechanism of the sensor element. A sensor element 100 includes a micro heater (also referred to as a heater) 101 and two thermopiles (also referred to as temperature detectors) 102 provided symmetrically with the micro heater 101 interposed in between. In other words, the micro heater 101 and the two thermopiles 102 are arranged to be aligned in a predetermined direction. Above and below these, an insulating thin film 103 is formed as shown in Figs. 5(a) and 5(b), and the micro heater 101, the thermopile 102, and the insulating thin film 103 are provided on a silicon base 104. In addition, the silicon base 104 below the micro heater 101 and the thermopile 102 is provided with a cavity 105 formed by etching or the like.

The micro heater 101 is a resistor formed of, for example, polysilicon. In Figs. 5(a) and 5(b), a temperature distribution when the micro heater 101 generates heat is schematically shown by broken-line ellipses. Note that a higher temperature is indicated as the broken line is thicker. When there is no fluid flow, the temperature distribution around the micro heater 101 is substantially uniform as shown in Fig. 5(a). Whereas, for example, when fluid flows in a direction indicated by the broken-line arrow in Fig. 5(b), a temperature on a downstream side of the micro heater 101 becomes higher than that on the upstream side since ambient air moves. The sensor element 100 uses such bias of the heater heat distribution, to output a value indicating a flow rate.

An output voltage ΔV of the sensor element is expressed by the following Equation (1), for example.
[Formula 1]

$$\Delta V = A \cdot (T_h - T_a) \sqrt[b]{v_f} \qquad \cdots (1)$$

Note that Th is a temperature of the micro heater 101 (a temperature of an end of the thermopile 102 on the micro heater 101 side), Ta is a lower temperature of temperatures at an end of the thermopile 102 farther from the micro heater 101 (a temperature at a left end of the left thermopile 102 or a temperature at a right end of the right thermopile 102 in Fig. 5(a), and a temperature at a left end of the left thermopile 102 that is an upstream end in Fig.5(b)), Vf is an average value of flow velocity, and A and b are predetermined constants.

Further, the circuit board 5 of the flow rate measurement device 1 includes a controller (not shown) realized by an integrated circuit (IC) or the like, and calculates a flow rate on the basis of an output of the flow rate detector 11. Alternatively, the circuit board 5 may calculate a predetermined characteristic value on the basis of an output of the physical property value detector 12, and correct a flow rate by using the characteristic value.

<Flow rate detector and physical property value detector>

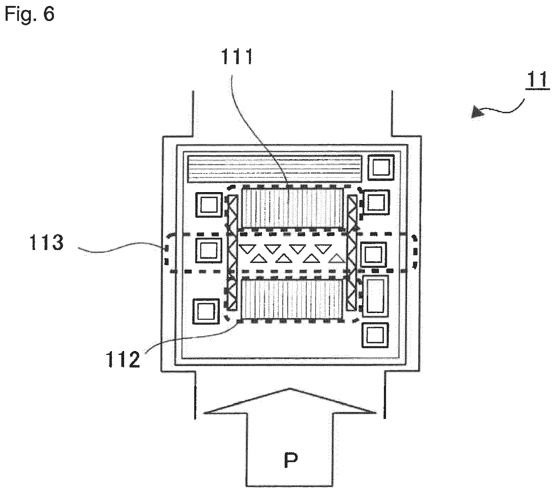

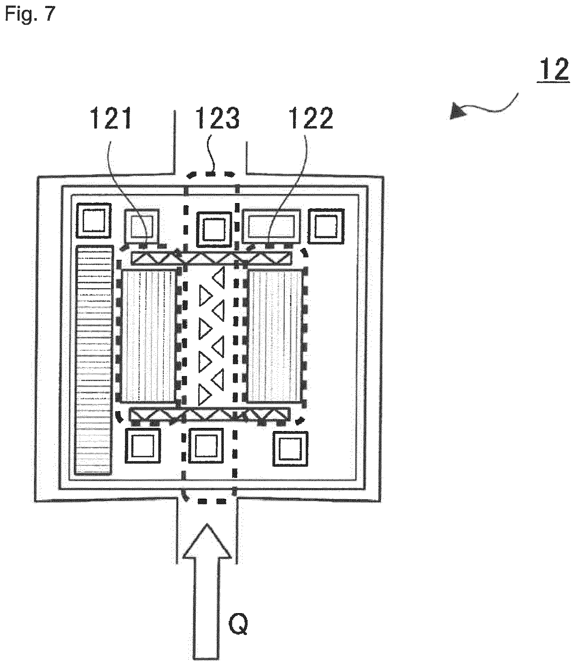

Fig. 6 is a plan view showing a schematic configuration of the flow rate detector 11 shown in Fig. 1, and Fig. 7 is a plan view showing a schematic configuration of the physical property value detector 12 shown in Fig. 1. As shown in Fig. 6, the flow rate detector 11 includes a first thermopile (also referred to as a temperature detector) 111 and a second thermopile (also referred to as a temperature detector) 112 configured to detect a temperature of measurement target fluid, and a micro heater (also referred to as a heater) 113 configured to heat the measurement target fluid. The heater 113, the temperature detector 111, and the temperature detector 112 are arranged aligned along a flow direction P of the measurement target fluid in the flow rate detector 11. Further, each shape of the heater 113, the temperature detector 111, and the temperature detector 112 is substantially rectangular in plan view, and each longitudinal direction is orthogonal to the flow direction P of the measurement target fluid.

The temperature detector 112 is arranged on the upstream side of the heater 113 while the temperature detector 111 is arranged on the downstream side, and the temperature detector 111 and the temperature detector 112 detect temperatures at symmetrical positions with the heater 113 interposed in between.

In the flow rate measurement device 1, the sensor elements 100 having substantially the same structure are used for the physical property value detector 12 and the flow rate detector 11, and arranged with arrangement angles with respect to the flow direction of the fluid being different by 90 degrees in plan view of the sensor elements 100. This allows the sensor elements 100 having the same structure to be used for the physical property value detector 12 and the flow rate detector 11, and can suppress the manufacturing cost of the flow rate measurement device 1.

Whereas, as shown in Fig. 7, the physical property value detector 12 includes a first thermopile (also referred to as a temperature detector) 121 and a second thermopile (also referred to as a temperature detector) 122 configured to detect a temperature of measurement target fluid, and a micro heater (also referred to as a heater) 123 configured to heat the measurement target fluid. Inside the physical property value detector 12, the heater 123, the temperature detector 121, and the temperature detector 122 are arranged aligned in a direction orthogonal to a flow direction Q of the measurement target fluid. Further, each shape of the heater 123, the temperature detector 121, and the temperature detector 122 is substantially rectangular in plan view, and each longitudinal direction is along the flow direction Q of the measurement target fluid. Further, the temperature detector 121 and the temperature detector 122 are arranged symmetrically with the heater 123 interposed in between, and detect temperatures at symmetrical positions on both sides of the heater 123. Therefore, measured values of the temperature detector 121 and the temperature detector 122 are almost the same, and an average value may be adopted or any one of the values may be adopted.

Here, since the temperature distribution is biased to the downstream side due to the flow of the fluid, a change in temperature distribution in the direction orthogonal to the flow direction is smaller than a change in temperature distribution in the fluid flow direction. Therefore, by arranging the temperature detector 121, the heater 123, and the temperature detector 122 to be aligned in this order in a direction orthogonal to the flow direction of the measurement target fluid, it is possible to reduce a change in the output characteristics of the temperature detector 121 and the temperature detector 122 due to a change in the temperature distribution. Therefore, an influence of a change in temperature distribution due to a flow of fluid can be reduced, and detection accuracy by the physical property value detector 12 can be improved.

Further, since a longitudinal direction of the heater 123 is arranged along the flow direction of the measurement target fluid, the heater 123 can heat the measurement target fluid over a wide range in the flow direction of the measurement target fluid. This can reduce a change in the output characteristics of the temperature detector 121 and the temperature detector 122 even in a case where the temperature distribution is biased to the downstream side due to a flow of the measurement target fluid. Similarly, when measuring a fluid temperature, it is possible to reduce an error in a measured value caused by a flow velocity. Note that the fluid temperature may be obtained by subtracting a temperature rise due to heating by the heater 123 from a temperature detected by the temperature detector 121 and the temperature detector 122, or may be detected in a state where the heater 123 does not perform heating. According to the physical property value detector 12, it is possible to suppress an influence of a change in temperature distribution due to a flow of the measurement target fluid, and to improve detection accuracy of a physical property value and a fluid temperature.

Furthermore, since a longitudinal direction of the temperature detector 121 and the temperature detector 122 is arranged along a flow direction of the measurement target fluid, the temperature detector 121 and the temperature detector 122 can detect a temperature over a wide range in the flow direction of the measurement target fluid. This can reduce a change in the output characteristics of the temperature detector 121 and the temperature detector 122 even in a case where the temperature distribution is biased to the downstream side due to a flow of the measurement target fluid. Therefore, an influence of a change in temperature distribution due to a flow of the measurement target fluid can be reduced, and detection accuracy by the physical property value detector 12 can be improved.

<Functional configuration>

Fig. 8 is a block diagram showing an example of a functional configuration of the flow rate measurement device 1. The flow rate measurement device 1 includes the flow rate detector 11, the physical property value detector 12, a controller 13, and a communication unit 15. The flow rate detector 11 includes the temperature detector 111 and the temperature detector 112. The physical property value detector 12 includes the temperature detector 121 and the temperature detector 122. Note that illustration of the heater 113 shown in Fig. 6 and the heater 123 shown in Fig. 7 is omitted. Further, the controller 13 includes a detection value acquisition unit 131, a characteristic value calculator 132, and a flow rate calculator 133.

The flow rate detector 11 calculates a difference between a signal corresponding to a temperature detected by the temperature detector 111 and a signal corresponding to a temperature detected by the temperature detector 112, and outputs to the detection value acquisition unit 131 of the controller 13. The physical property value detector 12 outputs a signal corresponding to a temperature detected by the temperature detector 121 to the characteristic value calculator 132. Note that the physical property value detector 12 may obtain an average value of signals corresponding to temperatures detected by the temperature detector 121 and the temperature detector 122, and output to the characteristic value calculator 132. Alternatively, a signal corresponding to a temperature may be acquired using either the temperature detector 121 or the temperature detector 122.

The detection value acquisition unit 131 acquires a detection value corresponding to a fluid flow rate outputted from the flow rate detector 11 at a predetermined measurement interval. The characteristic value calculator 132 calculates a characteristic value on the basis of at least one of detection values of the temperature detector 121 and the temperature detector 122 of the physical property value detector 12. Note that the characteristic value calculator 132 may change a temperature of the micro heater of the physical property value detector 12, and calculate a characteristic value by multiplying a difference in temperatures of the measurement target fluid detected by the temperature detector 121 or the temperature detector 122 before and after the change by a predetermined coefficient.

The flow rate calculator 133 calculates a flow rate on the basis of a detection value acquired by the detection value acquisition unit 131. At this time, the flow rate calculator 133 may correct the flow rate by using the characteristic value calculated by the physical property value detector 12. Further, the communication unit 15 transmits information processed in the controller 13 to the outside in a wired or wireless manner, and receives commands and set values from the outside in a wired or wireless manner and transmits to the controller 13.

Meanwhile, a conventional flow rate calculator 133 has calculated a volume flow rate (l/min) of fluid on the basis of the ΔV equation obtained in (1). However, when considering the fact that the purpose of measuring the flow rate with the flow rate measurement device 1 is often to measure a usage amount of a gas, and the like, it is desirable that the fluid flow rate is outputted as a heat flow rate (J/min), that is, in a form of an amount of energy that can be supplied by the fluid that has flowed, rather than a volume flow rate (l/min), when measuring the flow rate of fluid. This is based on the fact that gas consumed as household energy is used as thermal energy by combustion. Further, originally, contents of correction with the fluid characteristic value calculated by the characteristic value calculator 132 have been also complicated since a measured value of the volume flow rate (l/min) changes as being affected by a temperature or pressure of the fluid. If the heat flow rate (J/min) is finally outputted from the flow rate measurement device 1, the contents of correction can be further simplified.

On the basis of the above insight, in the embodiment, rather than calculating a volume flow rate (l/min) of fluid by the flow rate calculator 133, a heat flow rate (J/min) of the fluid is calculated, and a final output from the flow rate measurement device 1 is to be the heat flow rate (J/min).

Fig. 9 shows a relationship between a gas volume flow rate (l/min), an output of the flow rate detector 11 (V), and a gas heat flow rate (J/min), and gas temperature change and gas composition change, in a measurement principle for measuring a flow rate of a gas as fluid. As can be seen from Fig. 9, the volume flow rate (l/min) is strongly affected by a temperature and pressure of the gas. More specifically, when the gas temperature is low or the gas pressure is high, the volume flow rate (l/min) is measured low since the volume of the gas is relatively small. Whereas, when the gas temperature is high or the gas pressure is low, the volume flow rate (l/min) is measured high since the volume of the gas is relatively large. Further, a measured value of the volume flow rate (l/min) does not change as long as the temperature and volume of the fluid are the same even if composition of the fluid is different.

On the other hand, an output value of the flow rate detector 11 is a value based on a difference between temperatures detected by the two temperature detectors 111 and 112 in which the heat of the heater 113 is detected via fluid, and is an output related to a mass flow rate. Therefore, there is no influence of a change in a fluid temperature or pressure. Whereas, an output value of the flow rate detector 11 is affected by composition of the fluid. For example, when the fluid is methane, the output value is lower than that in a case where the fluid is a mixed gas of methane and ethane.

Furthermore, in principle, the heat flow rate (J/min) is also an amount related to a molecular structure and the number of molecules of the fluid that has flowed, that is, a mass flow rate, and thus is not affected by a temperature or pressure of the fluid. Whereas, the heat flow rate (J/min) is affected by composition of the fluid that has flowed, that is, a molecular structure. For example, when the fluid is methane, the output value is lower than that in a case where the fluid is a mixed gas of methane and ethane.

As described above, it can be seen that, in principle, the output value of the flow rate detector 11 and the heat flow rate (J/min) are similarly affected, while the output value of the flow rate detector 11 and the volume flow rate (l/min) are affected differently by the fluid temperature or pressure and the fluid composition.

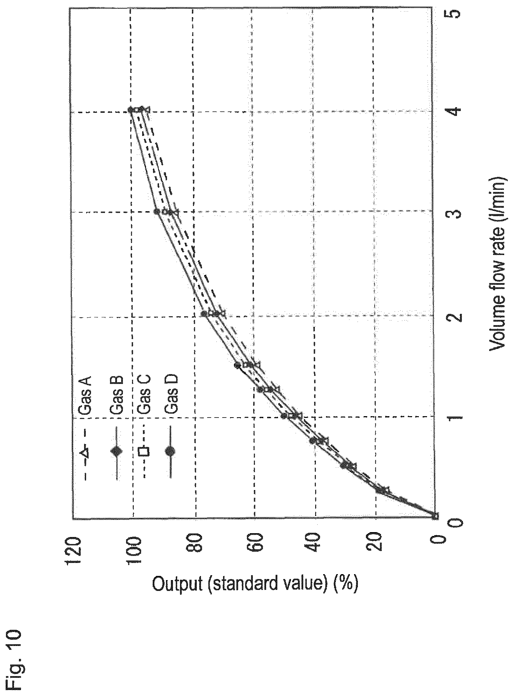

Fig. 10 shows a graph of a relationship between a volume flow rate and an output of the flow rate detector 11 for each fluid composition. In Fig. 10, a horizontal axis represents a volume flow rate (l/min), and a vertical axis represents an output (standard value) (%) of the flow rate detector 11. Further, the graph also describes a case where the fluid composition is four types of gases A to D. From Fig. 10, it can be seen that some correction is necessary also for composition of the fluid in the flow rate calculator 133 since the output of the flow rate detector 11 is affected by the composition of the fluid when the volume flow rate (l/min) of the fluid is measured.

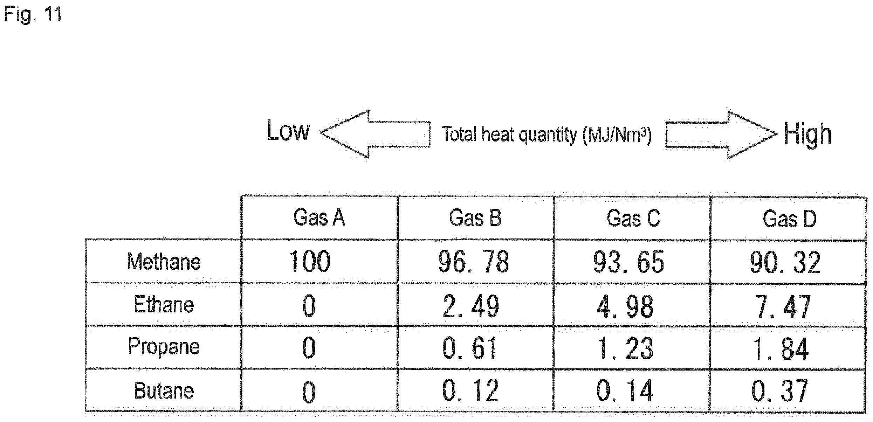

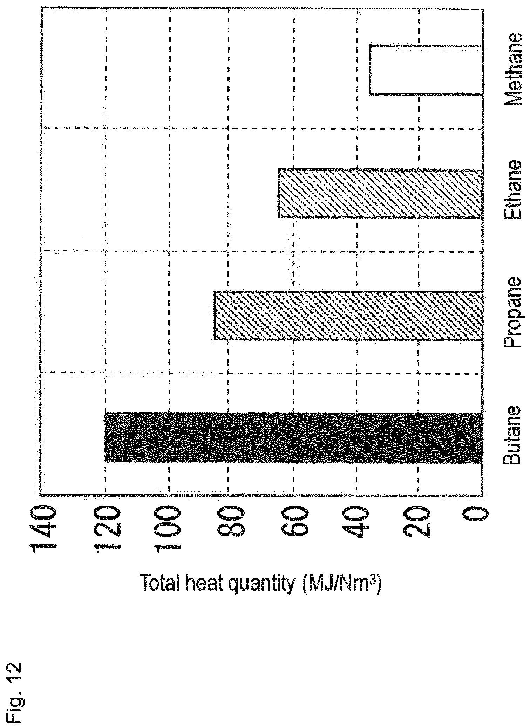

Meanwhile, Fig. 11 shows a composition table of the gas A to gas D in Fig. 10. The gas A is a gas of 100% methane, and the gas B to the gas D are gases in which, in addition to methane, ethane, propane, and butane are mixed in the ratio shown in Fig. 11. A heat quantity (MJ/Nm$^3$: heat quantity per unit volume in a normal state) is higher in the order of the gas D, the gas C, the gas B, and the gas A. Moreover, Fig. 12 shows each heat quantity (MJ/Nm$^3$) of methane, ethane, propane, and butane.

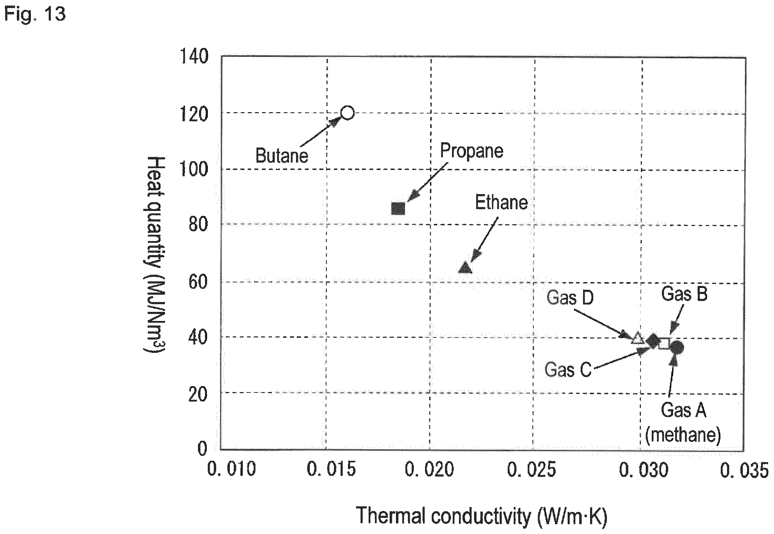

Next, the reason why the output of the flow rate detector 11 and the heat flow rate (J/min) of the fluid show a high correlation will be described. Fig. 13 shows a relationship between a heat quantity (MJ/Nm$^3$) and thermal conductivity (W/m·K) of each of the gas A to the gas D, and butane, propane, ethane, and methane contained in the gas A to the gas D. Thus, in these gases, there is a relationship that the thermal conductivity (W/m·K) becomes lower as the heat quantity (MJ/Nm$^3$) is higher, and the thermal conductivity (W/m·K) is higher as the heat quantity (MJ/Nm$^3$) is lower.

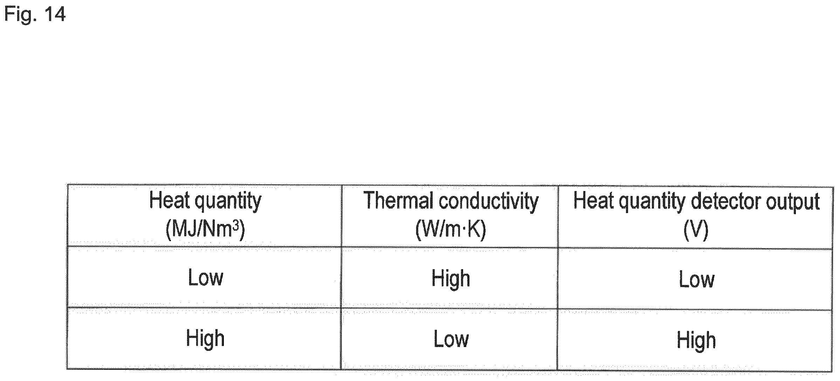

Then, in a case where the thermal conductivity (W/m·K) of the fluid is high, the temperature of the temperature detectors 111 and 112 becomes relatively low since the heat of the heater 113 in the flow rate detector 11 is well dissipated into the surrounding fluid, and the heat easily escapes. Furthermore, when the temperature of the temperature detectors 111 and 112 becomes relatively low, the output of the flow rate detector 11 is lowered since the temperature difference between the temperature detector 111 and the temperature detector 112 is small. As a result, as shown in the table of Fig. 14, a relationship is established in which, when the heat quantity (MJ/Nm$^3$) of fluid is lower, the thermal conductivity (W/m·K) of the fluid is higher, and the output of the flow rate detector 11 becomes lower, and there is a high correlation between the output of the flow rate detector 11 and the heat flow rate (MJ/Nm$^3$) of the fluid.

As a result, while the output (standard value) (%) of the flow rate detector 11 is affected by the composition of the fluid as shown in Fig. 15(a) in measuring the volume flow rate (l/min) of fluid with the flow rate measurement device 1, the output (standard value) (%) of the flow rate detector 11 is less affected by the composition of the fluid as shown in Fig. 15(b) in measuring the heat flow rate (kJ/min) of the fluid with the flow rate measurement device 1.

Note that, in the graphs shown in Fig. 15(a) and 15(b), the relationship between the heat flow rate (kJ/min) and the output (standard value) (%) of the flow rate detector 11 is not necessarily linear, and an inclination (corresponding to sensitivity) of the heat flow rate (kJ/min) tends to decrease as an absolute value of the heat flow rate (kJ/min) increases.

On the other hand, for example, by performing a simple correction by the flow rate calculator 133 with a correction coefficient stored in a table, the final output from the flow rate measurement device 1 can be further adjusted so as to change linearly with respect to the heat flow rate (kJ/min) without being affected by the composition of the fluid, as shown in Fig. 16. Here, a correction unit is realized including the table.

Note that, in the flow rate detector 11, a relationship between an output ΔV and a heat quantity ΣQ of fluid can

be expressed as the following Equation (2).
[Formula 2]

$$\Delta V = \Sigma Q \cdot \alpha \quad \cdots \cdots \quad (2)$$

Here, Q indicates a heat quantity of fluid whose temperature is detected by each temperature detector, and $\Sigma Q$ indicates a total heat quantity of fluid whose temperature is detected by the two temperature detectors. Further, $\alpha$ is a Seebeck coefficient.

Here, the heat quantity Q of the fluid is defined as the following Equation (3).
[Formula 3]

$$Q = A \frac{k^{0.6} c^{0.4}}{\rho \; \nu^{0.4}} G^{0.8} \quad \cdots \cdots \quad (3)$$

In Equation (3), A and G are coefficients, k is thermal conductivity, c is specific heat, p is density, and v is kinematic viscosity.

Thus, the heat quantity $\Sigma Q$ can be directly acquired from the output $\Delta V$ of the flow rate detector 11 in the embodiment.

<Flow rate measurement processing>

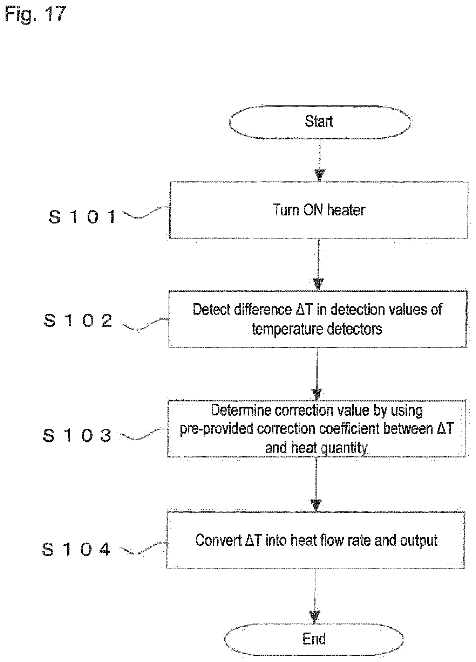

Fig. 17 is a processing flowchart showing an example of flow rate measurement processing in the flow rate measurement device 1. This processing is executed by sending commands to the flow rate detector 11, the physical property value detector 12, and the controller 13 from a CPU (not shown) provided in the circuit board 1 of the flow rate measurement device 1. When this processing is executed, first, the heater 113 in the flow rate detector 11 is turned ON in step S101. When the processing of S101 ends, the process proceeds to S102. In S102, a difference $\Delta T$ between detection values of the temperature detectors 111 and 112, which is the output of the flow rate detector 11, is detected. More specifically, $\Delta T$ is detected by the detection value acquisition unit 131 when output signals of the temperature detector 111 and the temperature detector 112 of the flow rate detector 11 are outputted to the detection value acquisition unit 131 of the controller 13. When the processing of S102 ends, the process proceeds to S103.

In S103, a correction value is determined using a correction coefficient between $\Delta T$ and the heat flow rate (J/min). More specifically, the flow rate calculator 133 accesses a table stored in advance in a memory (not shown) on the circuit board 5, and introduces a correction coefficient to multiply to $\Delta T$, to obtain a correction value. When the processing of S103 ends, the process proceeds to S104. In S104, the heat quantity calculator 133 further performs correction as required based on the output from the characteristic value calculator 132, and the final heat flow rate (J/min) is outputted. When the processing of S104 ends, this routine is temporarily ended.

As described above, in this embodiment, as the output value from the flow rate measurement device 1, rather than the volume flow rate (l/min), the heat flow rate (J/min) having a higher correlation with the difference $\Delta T$ between the detection values of the temperature detectors 111 and 112 outputted from the flow rate detector 11 is outputted. This enables measurement of a flow rate with higher accuracy without being affected by a volume or pressure of the gas. In addition, the measured flow rate can be outputted so as to enable detection of an amount of energy that can be supplied by the gas that has flowed. Furthermore, the correction contents in the flow rate calculator 133 can be further simplified, and the calculation load in the controller 13 can be reduced.

<Second embodiment

Next, as a second embodiment, an example will be described in which a final output of a flow rate measurement device can be adjusted with a volume flow rate (l/min) and a heat flow rate (J/min). Hereinafter, the same reference numerals are given to the common configurations of this embodiment and the first embodiment, and the description thereof is omitted, and only the differences between this embodiment and the first embodiment will be described.

Fig. 18 is a block diagram showing an example of a functional configuration of a flow rate measurement device according to the embodiment. The flow rate measurement device in the embodiment includes a conversion adjuster 14 in addition to a flow rate detector 11, a physical property value detector 12, and a controller 13. The conversion adjuster 14 transmits a command to the controller 13, and adjusts whether to calculate and output a volume flow rate (l/min) as before, calculate and output a heat flow rate (J/min), or calculate and output both the volume flow rate (l/min) and the heat flow rate (J/min), in a flow rate calculator 133.

As a conversion adjustment method, adjustment can be made in terms of software, or may be made by a hardware configuration such as a changeover switch. Further, it may be determined which flow rate is calculated and outputted at a manufacturing stage of the flow rate measurement device to set the adjustment contents of the conversion adjuster 14, or the adjustment can be made while the flow rate measurement device is in use. Note that the conversion adjuster 14 may perform adjustment such that the flow rate calculator 133 calculates and outputs a flow rate according to another definition of a volume flow rate (l/min) and a heat flow rate (J/min). This allows the final output to be adjustable between the volume flow rate (l/min) and the heat flow rate (J/min) depending on the intended purpose of the flow rate measurement device, enabling further improvement of the convenience of the flow rate measurement device.

<Third embodiment

Next, as a third embodiment, a description will be given to a gas meter in which the flow rate measurement device according to the first embodiment or the second embodiment is incorporated, and a flow rate measurement device unit. This embodiment is an example in which the flow rate measurement device 1 according to the first embodiment is incorporated in a gas meter for measurement of a usage amount of a gas. Fig. 19 is a block diagram showing an example of a functional configuration of a gas meter 150 in which the flow rate measurement device 1 is incorporated. The gas meter 150 includes a display 151, a power supply unit 152, an operation unit 153, a vibration detector 154, a cutoff unit 155, a gas meter controller 156 as an integrated controller, a gas meter memory 157, and a gas meter communication unit 158, in addition to the flow rate measurement device 1. Note that these configurations are accommodated in a casing 150b except for the operation unit 153.

Here, the display 151 is a display that displays a date, presence or absence of cutoff processing (described later), and the like, in addition to a usage amount of the gas based on a flow rate (a heat flow rate (J/min), a volume flow rate (l/min), or both) measured and outputted by the flow rate measurement device 1, and a liquid crystal display panel or the like may be used. The power supply unit 152 is a part that supplies power to the flow rate measurement device 1 and other configurations of the gas meter 150, and may be configured by a battery such as an alkaline battery. The operation unit 153 is provided outside the gas meter 150, and is a part to be operated by a contractor of the gas, a meter reader, or the like. For example, it may be possible to perform operations such as resetting of the gas meter 150, adjustment of the time, switching of a flow rate to be displayed and outputted (a heat flow rate, a volume flow rate, or both), and releasing of a cutoff state described later.

The vibration detector 154 includes, for example, an acceleration sensor (not shown) and the like, and detects vibration of the gas meter 150 itself. The cutoff unit 155 has an actuator such as a solenoid and a valve that closes a main flow path portion 2, and determines that an earthquake has occurred and cuts off the gas passing through the main flow path portion 2 when vibration equal to or greater than a threshold value is detected by the vibration detector 154. The gas meter controller 156 is electrically connected to the flow rate measurement device 1, the display 151, the power supply unit 152, the operation unit 153, the vibration detector 154, the cutoff unit 155, the gas meter memory 157, and the gas meter communication unit 158, and controls each unit. For example, the gas meter controller 156 receives input information from the operation unit 153, and transmits a command corresponding to the input information to each unit. Further, when the vibration detector 154 detects an acceleration signal that is equal to or greater than a threshold value, the gas meter controller 156 transmits a cutoff signal to the cutoff unit 155. The gas meter memory 157 is a part that stores outputs from the flow rate measurement device 1 and the vibration detector 154 in a time series over a predetermined period, and may be formed by a memory element such as an SRAM or a DRAM. The gas meter communication unit 158 can transmit each piece of information processed by the gas meter controller 156 to the outside in a wired or wireless manner, and receives an external command or a set value and transmits to the gas meter controller 156. In addition, by communicating with the communication unit 15 included in the flow rate measurement device 1, the gas meter communication unit 158 may receive information processed by the controller 13 of the flow rate measurement device 1, and transmit a control signal or a set value for the flow rate measurement device 1.

Note that, the gas meter 150 may be configured by unitizing, for example, the flow rate measurement device 1, the display 151, the power supply unit 152, the vibration detector 154, the gas meter controller 156, the gas meter memory 157, and the gas meter communication unit 158 in the configurations of the gas meter 150, electrically connecting the operation unit 153 and the cutoff unit 155 to this flow rate measurement device unit 150a, and incorporating into the casing 150b. This allows the gas meter 150 to be manufactured more efficiently.

Note that, in this embodiment, the configurations belonging to the gas meter 150 and the flow rate measurement device unit 150a are an example, and can be changed in accordance with the function and manufacturing conditions of the gas meter 150. Further, the flow rate measurement device according to the present invention is not limited to the configurations shown in the above embodiments. The configurations of the above embodiments can be combined as much as possible without departing from the problems and technical ideas of the present invention. Further, in the above embodiments, the example has been described in which the flow rate measurement device 1 measures and outputs a heat flow rate (J/min). However, substantially similar contents are established even a heat quantity (J) is used instead. In other words, this is because the heat quantity (J) is a numerical value obtained by performing time integration on the heat flow rate (J/min), and the heat quantity (J) can be obtained by performing proportional calculation on the heat flow rate (J/min) in accordance with a measurement time (min) in the above embodiments, for example, in a case where the heat flow rate (J/min) is constant. Therefore, in the above embodiments, the heat flow rate (J/min) may be read as the heat quantity (J). In that case, in the gas meter 150, for example, the gas meter controller 156 may further convert the heat quantity (J) measured and outputted by the flow rate measurement device 1 into the heat flow rate (J/min).

Note that, in the following, in order to make it possible to compare the configuration requirements of the present invention with the configurations of the embodiments, the configuration requirements of the present invention are described with reference numerals in the drawings.

<Invention 1>

A flow rate measurement device (1) for detecting a flow rate of measurement target fluid flowing through a main flow path (2),
the flow rate measurement device including:

a heater (113) configured to heat measurement target fluid;
a plurality of temperature detectors (111, 112) arranged with the heater interposed in between in a flow direction of the measurement target fluid, the plurality of temperature detectors being configured to detect a temperature of the measurement target fluid; and
a converter (133) configured to convert a difference in outputs of the plurality of temperature detectors into a heat flow rate or a heat quantity of measurement target fluid flowing through the main flow path.

<Invention 2>

The flow rate measurement device according to claim 1, in which the converter (133) has a correction unit (133) configured to perform correction such that a relationship between a difference in outputs of the plurality of temperature detectors (111, 112) and a heat flow rate or a heat quantity of measurement target fluid flowing through the main flow path (2) becomes a straight line.

<Invention 3>

The flow rate measurement device according to claim 1 or 2, further including:

a second converter (133) configured to convert a difference in outputs of the plurality of temperature detectors (111, 112) into a volume flow rate of measurement target fluid flowing through the main flow path (2); and
a conversion adjuster (14) configured to adjust a combination of a conversion to a heat flow rate or a heat quantity by the converter (133) and a conversion with the volume flow rate by the second converter (133), in converting a difference in outputs of the plurality of temperature detectors into the heat flow rate or the heat quantity of measurement target fluid flowing through the main flow path (2).

<Invention 4>

A flow rate measurement device unit (150a) including:

the flow rate measurement device (1) according to any one of claims 1 to 3;
a display (151) configured to display a heat flow rate or a heat quantity converted by the converter; and
an integrated controller (156) configured to control the flow rate measurement device and the display.

<Invention 5>

A gas meter (150) including:

the flow rate measurement device (1) according to any one of claims 1 to 3;
a display (151) configured to display a heat flow rate or a heat quantity measured by the flow rate measurement device;
an integrated controller (156) configured to control the flow rate measurement device and the display;
a power supply unit (152) configured to supply power to the flow rate measurement device (1), the display (151), and the integrated controller (156);
a casing (150b) configured to accommodate the flow rate measurement device (1), the display (151), and the integrated controller (156); and
an operation unit (153) configured to allow setting of an operation of the flow rate measurement device from outside the casing (150b).

DESCRIPTION OF SYMBOLS

| 1 | flow rate measurement device |
|---|---|
| 11 | flow rate detector |
| 111 | temperature detector |
| 112 | temperature detector |
| 113 | heater |
| 12 | physical property value detector |
| 121 | temperature detector |
| 122 | temperature detector |
| 123 | heater |
| 13 | controller |
| 131 | detection value acquisition unit |
| 132 | characteristic value calculator |
| 133 | flow rate calculator |
| 14 | conversion adjuster |
| 15 | communication unit |
| 2 | main flow path portion |
| 21 | orifice |
| 3 | sub flow path portion |
| 32 | physical property value detection flow path |
| 33 | flow rate detection flow path |
| 34 | inflow path |
| 35 | outflow path |
| 4 | seal |
| 5 | circuit board |
| 6 | cover |
| 100 | sensor element |
| 101 | micro heater |
| 102 | thermopile |
| 103 | insulating thin film |
| 104 | silicon base |
| 105 | cavity |
| 150 | gas meter |
| 150a flow | rate measurement device unit |

**Claims**

1. A flow rate measurement device for detecting a flow rate of measurement target fluid flowing through a main flow path, the flow rate measurement device comprising:

   a heater configured to heat measurement target fluid;
   a plurality of temperature detectors arranged with the heater interposed in between in a flow direction of the measurement target fluid, the plurality of temperature detectors being configured to detect a temperature of the measurement target fluid; and

a converter configured to convert a difference in outputs of the plurality of temperature detectors into a heat flow rate or a heat quantity of measurement target fluid flowing through the main flow path.

2. The flow rate measurement device according to claim 1, wherein the converter has a correction unit configured to perform correction such that a relationship between a difference in outputs of the plurality of temperature detectors and a heat flow rate or a heat quantity of measurement target fluid flowing through the main flow path becomes a straight line.

3. The flow rate measurement device according to claim 1 or 2, further comprising:

a second converter configured to convert a difference in outputs of the plurality of temperature detectors into a volume flow rate of measurement target fluid flowing through the main flow path; and
a conversion adjuster configured to adjust a combination of a conversion to a heat flow rate or a heat quantity by the converter and a conversion with the volume flow rate by the second converter, in converting a difference in outputs of the plurality of temperature detectors into the heat flow rate or the heat quantity of measurement target fluid flowing through the main flow path.

4. A flow rate measurement device unit comprising:

the flow rate measurement device according to any one of claims 1 to 3;
a display configured to display a heat flow rate or a heat quantity converted by the converter; and
an integrated controller configured to control the flow rate measurement device and the display.

5. A gas meter comprising:

the flow rate measurement device according to any one of claims 1 to 3;
a display configured to display a heat flow rate or a heat quantity measured by the flow rate measurement device;
an integrated controller configured to control the flow rate measurement device and the display;
a power supply unit configured to supply power to the flow rate measurement device, the display, and the integrated controller;
a casing configured to accommodate the flow rate measurement device, the display, and the integrated controller; and
an operation unit configured to allow setting of an operation of the flow rate measurement device from outside the casing.

Fig. 1

EP 3 683 555 A1

Fig. 2

EP 3 683 555 A1

Fig. 3

35
33
3
32
34

12

11

P

Q

EP 3 683 555 A1

Fig. 4

Fig. 5

（a）

（b）

Fig. 6

111

11

113

112

P

Fig. 7

Fig. 8

Fig. 9

| | Temperature (pressure) change (Same mass flow rate/gas composition) | | Gas composition change (Same temperature/volume flow rate) | |
|---|---|---|---|---|
| | Temperature: Low | Temperature: High | Methane | Methane + ethane |
| Volume flow rate (l/min) | Low | High | Same volume flow rate | |
| Flow rate measurement device output (V) | Same output | | Low | High |
| Heat flow rate (J/min) | Same heat flow rate | | Low | High |

EP 3 683 555 A1

Fig. 10

Fig. 11

Low ⟵ Total heat quantity (MJ/Nm³) ⟶ High

| | Gas A | Gas B | Gas C | Gas D |
|---|---|---|---|---|
| Methane | 100 | 96. 78 | 93. 65 | 90. 32 |
| Ethane | 0 | 2. 49 | 4. 98 | 7. 47 |
| Propane | 0 | 0. 61 | 1. 23 | 1. 84 |
| Butane | 0 | 0. 12 | 0. 14 | 0. 37 |

EP 3 683 555 A1

Fig. 12

EP 3 683 555 A1

Fig. 13

EP 3 683 555 A1

Fig. 14

| Heat quantity (MJ/Nm$^3$) | Thermal conductivity (W/m·K) | Heat quantity detector output (V) |
|---|---|---|
| Low | High | Low |
| High | Low | High |

Fig. 15

( a )

( b )

EP 3 683 555 A1

Fig. 16

Fig. 17

```
                    ⟨  Start  ⟩
                         │
                         ▼
          ┌──────────────────────────────┐
S 1 0 1   │        Turn ON heater         │
          └──────────────────────────────┘
                         │
                         ▼
          ┌──────────────────────────────┐
S 1 0 2   │ Detect difference ΔT in detection values of │
          │        temperature detectors          │
          └──────────────────────────────┘
                         │
                         ▼
          ┌──────────────────────────────┐
          │  Determine correction value by using   │
S 1 0 3   │ pre-provided correction coefficient between ΔT │
          │          and heat quantity            │
          └──────────────────────────────┘
                         │
                         ▼
          ┌──────────────────────────────┐
S 1 0 4   │  Convert ΔT into heat flow rate and output  │
          └──────────────────────────────┘
                         │
                         ▼
                    ⟨   End   ⟩
```

Fig. 18

Fig. 19

EP 3 683 555 A1

**INTERNATIONAL SEARCH REPORT**

| International application No. |
| --- |
| PCT/JP2018/026240 |

**A. CLASSIFICATION OF SUBJECT MATTER**
Int.Cl. G01F1/68(2006.01)i, G01F3/22(2006.01)i

According to International Patent Classification (IPC) or to both national classification and IPC

**B. FIELDS SEARCHED**

Minimum documentation searched (classification system followed by classification symbols)
Int.Cl. G01F1/68-1/699

Documentation searched other than minimum documentation to the extent that such documents are included in the fields searched
Published examined utility model applications of Japan      1922-1996
Published unexamined utility model applications of Japan      1971-2018
Registered utility model specifications of Japan      1996-2018
Published registered utility model applications of Japan      1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2003-035612 A (TOKYO GAS CO., LTD.) 07 February 2003, paragraphs [0028]-[0049], fig. 1-5 (Family: none) | 1-2<br>3-5 |
| X | WO 2009/088017 A1 (YAMATAKE CORP.) 16 July 2009, paragraphs [0028]-[0038], fig. 3-5 & JP 2009-162436 A & US 2010/0269922 A1, paragraphs [0035]-[0050], fig. 3-5 & EP 2241810 A1 & CN 101910727 A | 1 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31.07.2018 | 14.08.2018 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2018/026240

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2009/088016 A1 (YAMATAKE CORP.) 16 July 2009, paragraphs [0031]-[0041], fig. 4-6 & JP 2009-162128 A & US 2010/0285414 A1, paragraphs [0036]-[0051], fig. 4-6 & EP 2241811 A1 & CN 101910728 A | 1 |
| Y | JP 2002-062178 A (TOKYO GAS CO., LTD.) 28 February 2002, paragraphs [0019]-[0041], [0057], fig. 1, 2, 5 (Family: none) | 3-5 |
| Y | JP 2003-177037 A (YAZAKI CORPORATION) 27 June 2003, paragraphs [0125], [0186] & JP 2007-139795 A | 3-5 |

Form PCT/ISA/210 (continuation of second sheet) (January 2015)

**EP 3 683 555 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017129470 A